# EUROPEAN PATENT APPLICATION

(11) **EP 1 110 595 A1**
(43) Date of publication of application: **27.06.2001**
(21) Application number: 00121792.6
(22) Date of filing: 05.10.2000
(51) Int. Cl.: B01D 53/50, C01F 11/46, C01F 5/14

(54) **Reduction of calcium and chloride in the flue gas desulfurization process**

(30) Priority: 23.12.1999 US 471909
(71) Applicant: Dravo Lime, Inc., Pittsburgh, PA 15222 (US)
(72) Inventor: Berisko, Daniel W., Mannington, West Virginia 26582 (US)
(74) Representative: Grünecker, Kinkeldey, Stockmair & Schwanhäusser Anwaltssozietät

(57) **Abstract**

The method of the present invention achieves a reduction in scale formation in process lines and collection tanks following a regeneration tank in the flue gas desulfurization (FGD) process system. The method achieves a reduction in scale formation by the removal of sulfates, primarily in the form of calcium sulfate or gypsum, as well as calcium chloride from the system. Removal occurs by one or more of the following which achieve a removal of sulfates from the system: 1) crystallizing gypsum in an overflow tank located after a regeneration tank by providing seed crystals; 2) producing and crystallizing gypsum from a post regeneration tank liquor line while at the same time producing MgCl₂; and 3) producing and crystallizing gypsum from the system return line while at the same time producing MgCl₂.

## Description

### Field of the Invention

The present invention relates to a process for substantially preventing gypsum scaling in a process for removing sulfur dioxide from a gaseous stream using magnesium components, wherein a purified magnesium hydroxide product is produced from the scrubbing effluent.

### Background of the Invention

The need to remove sulfur dioxide from gaseous streams, such as flue gases from power plants using fossil fuels, in order to protect the environment has become increasingly important with the enactment of legislation limiting the amount of sulfur dioxide that can be discharged from facilities. In order to meet this need, various sulfur dioxide removal processes have been developed, including dry removal systems and wet scrubbing systems. In wet scrubbing systems, aqueous slurries of reactant products result which are normally dewatered and the dewatered slurry may be disposed of as a landfill material.

In order to recover various components of an aqueous sludge from a sulfur dioxide wet scrubbing system, attempts have been made to convert the sludge components to saleable byproducts. In systems where lime or limestone are used and calcium sulfites and/or sulfates are present in the sludge, for example, processes have been developed to produce gypsum in a form that would be saleable for use in wallboard or other products using gypsum.

Certain improved sulfur dioxide wet scrubbing systems are based on the use of magnesium hydroxide scrubbing liquor. US Pat. No. 5,039,499, issued to Donald Stowe, Jr., which is incorporated by reference herein and which is assigned to the assignee of the present invention, describes a process where magnesium hydroxide is added to an aqueous scrubbing liquor to remove sulfur dioxide from a gaseous stream, with effluent from the scrubber oxidized and then treated with a magnesium-containing lime slurry to obtain regenerated magnesium hydroxide for recycle to the scrubbing unit.

In systems where magnesium components are present in a wet scrubbing slurry for sulfur dioxide removal, with magnesium sulfite produced that is then oxidized to magnesium sulfate, and the sulfate contacted with lime to produce calcium sulfate as gypsum and magnesium hydroxide, the resultant magnesium hydroxide produced is contaminated with gypsum. The resultant magnesium hydroxide can be partially purified by physical separation, such as froth floatation, elutriation or hydrocloning, but in such cases, the magnesium hydroxide will still retain an amount of gypsum as a contaminant that limits the uses to which such magnesium hydroxide may be put. Generally, is has been found that following such physical separation, the magnesium hydroxide separated portion can contain between about 20 - 45 percent contaminants, a major portion of which is calcium sulfate, or gypsum. In order to purify the magnesium hydroxide so separated, various purification processes may be used but such processes contain use of additional chemicals or expensive equipment and the production of various by-products or the like which must be discarded.

It is an object of the present invention to provide a flue gas desulfurization method using an aqueous scrubbing medium containing magnesium components which substantially prevents gypsum scaling in the system process lines and collection tanks and provides for the collection of magnesium hydroxide and gypsum as salable products.

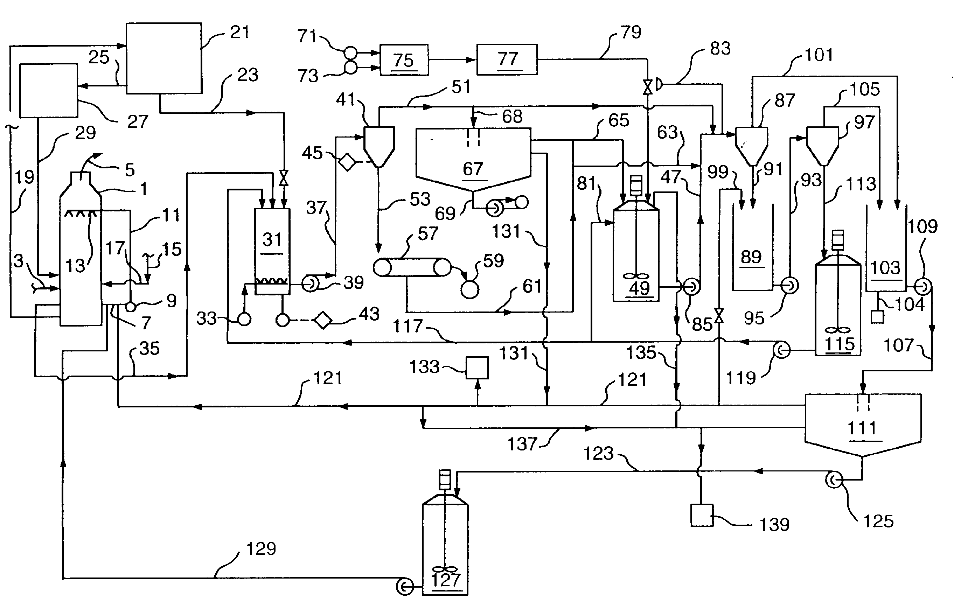

Other objects, features and advantages of the present invention will become apparent from the following detailed description taken in conjunction with the accompanying drawing.

### SUMMARY OF THE INVENTION

The method of the present invention achieves a reduction in scale formation in process lines and collection tanks following a regeneration tank in the flue gas desulfurization (FGD) process system. The method achieves a reduction in scale formation by the removal of sulfates, primarily in the form of calcium sulfate or gypsum, as well as calcium chloride from the system. Removal occurs by one or more of the following which achieve a removal of sulfates from the system: 1) crystallizing gypsum in an overflow tank located after a regeneration tank by providing seed crystals; 2) producing and crystallizing gypsum from a post regeneration tank liquor line while at the same time producing MgCl₂; and 3) producing and crystallizing gypsum from the system return line while at the same time producing MgCl₂.

As will be described, these embodiments can be utilized to solve the gypsum scaling problem by making modifications to the process flow scheme utilizing existing process streams.

### BRIEF DESCRIPTION OF THE DRAWING

The present invention will become more readily apparent from the following description of a preferred embodiment thereof shown, by way of example only, in the accompanying drawing, wherein a flow diagram illustrates the preferred process of the present invention.

### DETAILED DESCRIPTION OF THE INVENTION

The present process provides for the prevention of scaling in the removal of sulfur dioxide from flue gases using magnesium components in a wet scrubbing system. First, the method of the present invention will be described generally along with the description of the flue gas desulfurization system.

In the removal of sulfur dioxide from flue gas, the aqueous scrubbing medium is an aqueous suspension of magnesium hydroxide which forms magnesium sulfite by reaction with the sulfur dioxide in the gas, such as described in US Pat. No. 5,270,026, issued to John College and Lewis Benson, which is incorporated by reference herein and which is assigned to the assignee of the present invention, and US Pat. No. 5,039,499 also referred to hereinbefore.

Referring to the drawing, the preferred process is schematically illustrated, showing a wet scrubbing unit **1**, with a gaseous stream containing sulfur dioxide fed thereto through a line **3** and clean gas discharged through a line **5**. An aqueous scrubbing medium containing a magnesium component is charged to the wet scrubbing unit **1** and such aqueous medium recycled therethrough by means of a line **7**, a pump **9**, and a line **11** to the upper region of the wet scrubbing unit **1** and discharged through nozzles **13** so as to flow downwardly, countercurrent to the upward flow of the gas, in the wet scrubbing unit **1**. A supply of aqueous magnesium hydroxide, for use as the aqueous scrubbing medium, is fed through a line **15** to a line **17** for charging to the wet scrubbing unit **1**.

During operation of the wet scrubbing unit **1**, a bleed stream containing magnesium sulfite is removed from the wet scrubbing unit **1** through a line **19** and fed to a separator, such as a thickener unit **21**. In the thickener unit **21**, an underflow, in the form of a thickened aqueous sludge which contains solids, is separated and discharged through a line **23** as an underflow portion, while the clarified or overflow portion containing dissolved magnesium sulfite is fed through a line **25** to a thickener overflow surge tank **27**, and thickener overflow, as desired, is returned to the wet scrubbing unit 1 through a recycle line **29**. The species present in the scrubber liquor are MgSO₃, MgCl₂, MgSO₄, trace amounts of CaSO₃, CaCl₂ and trace amounts of CaSO₄.

The thickener sludge or underflow from thickener unit **21** is passed through line **23** to an oxidizer **31** and an oxygen containing gas, such as air, from a line **33**, may be charged thereto to oxidize magnesium sulfite to magnesium sulfate and form an aqueous solution. A bleed stream of spent desulfurization solution can also be removed from scrubbing unit **1** through a removal line **35** and fed directly to oxidizer **31**. The aqueous solution formed in oxidizer **31** is passed through a line **37**, by means of a pump **39**, to a solids separator **41**, typically a hydroclone separator. A hydroclone logic controller **43** may be used to control solids separator **41** indirectly by controlling parameters like flow rate and effluent density. Solids separator **41** may also have sensors and controllers associated with it like an oxidation level controller **45** which can detect, calculate, regulate and control oxygen levels in the solids separator **41**.

The major products of the oxidizer **31** are aqueous MgSO₄, H₂SO₄, MgCl₂, CaCl₂, and CaSO₄ from wet scrubbing unit **1** and an additional amount of CaSO₄ which is be added in purified form from a downstream surge tank, which will be described later.

The purpose of adding gypsum to oxidizer **31** from a downstream surge tank is two fold. First, oxidizer **31** contains calcium sulfate in solution in ionic form. It is undesirable to have the calcium sulfate precipitate out of solution and form scale on the inside of the vessel of oxidizer **31**. Therefore the gypsum added to oxidizer tank **31** acts as seed crystals causing the calcium sulfate to crystalize out of solution onto the face of the gypsum seed crystals. This helps reduce the possibility of gypsum scale in oxidizer **31**.

Second, the gypsum added to oxidizer **31** ensures that there is gypsum in suspension in the aqueous solution formed in oxidizer **31** which passed through line **37**, by means of pump **39**, to solids separator **41**. In the method of the present invention it is important to have gypsum in suspension in the process system following oxidizer **31** so that there exists a supply of seed crystals for removing dissolved calcium sulfate by precipitation.

The method of the present invention reduces calcium and chloride levels by precipitating CaSO₄ and CaCl₂ at the appropriate times in the process lines so the precipitated solids can be separated and removed and the remaining dissolved constituents can be recycled. In order to precipitate CaSO₄ and CaCl₂ downstream, for example from a liquor line **47** downstream from a regeneration tank **49**, the appropriate streams of products from oxidizer **31**, namely aqueous MgSO₄, H₂SO₄, MgCl₂, CaCl₂ and suspended CaSO₄, are prepared so they can be used later in the appropriate amounts. Thus locating solids separator **41** after the oxidizer **31** provides process flexibility and control over the subsequent treatment process by the creation of an overflow line **51** and an underflow line **53** from the solids separator **41**, that have different solids content. The creation of an overflow stream and an underflow stream from the solution exiting oxidizer **31** allows an operator to have two lines with different amounts of gypsum in the form of suspended solids which can act as seed crystals and varying amounts of sulfates in the form of dissolved MgSO₄. As will be shown with data later, the suspended gypsum and dissolved MgSO₄ will be used by the method of the present invention to reduce calcium and chloride levels in downstream process lines.

Referring to the drawing, the underflow line **53** of solids separator **41** transports a thick sludge of aqueous MgSO₄ and crystallized gypsum, to a filter **57** which discharges the gypsum as a filter cake **59** and returns remaining aqueous MgSO₄ having some suspended gypsum to the process by a return line **61**. The aqueous magnesium sulfate in return line **61** has a very low solids content because filter **57** collects substantially all the gypsum and discharges the mass as filter cake **59.** Return line **61** connects to the liquor line **47** of regeneration tank **49** via a branch line **63**. Return line **61** also connects to a charge line **65** of regeneration tank **49**; the charge line 65 directly connecting an upstream fines thickener **67** to downstream regeneration tank **49**.

The overflow line **51** from solids separator **41** takes aqueous MgSO₄, H₂SO₄, suspended gypsum, as well as small amounts of MgCl₂, CaCl₂ to both fines thickener **67** and the downstream liquor line **47** that exits the regeneration tank **49**. First, overflow line **51** goes to fines thickener **67** via a line **68**. In fines thickener **67** solids, mostly gypsum and gypsum contaminated with other solids, settle at the bottom half of fines thickener **67**. A heavier underflow in an underflow line **69** of fines thickener **67** goes to waste removing the gypsum and undesolvable solids from the system. A lighter overflow in the overflow line **65** containing some gypsum in suspension and trace amounts of CaCl₂ also in suspension is charged to regeneration tank **49.**

The overflow line **51** of solids separator **41** also goes directly to downstream liquor line **47** exiting the regeneration tank **49**. The purpose is to provide a magnesium sulfate stream to the regeneration tank **49** effluent stream in liquor line **47**.

Lime or dolomite, through a line **71**, and water, through a line **73**, are mixed in a slaker **75** and a slurry tank **77** and the slaked lime produced is fed through a line **79** to the regeneration tank **49**. In regeneration tank **49** the lime precipitates calcium sulfate from the magnesium sulfate solution, charged via charge line **65**, while simultaneously forming an aqueous magnesium hydroxide suspension. Gypsum can also be charged to regeneration tank **49** in an effective amount via branch line **81** which is branched from a downstream recycle stream. Slaked lime fed through line **79** can also be bled by a line **83** and added to liquor line **47** for the purpose of regulating pH in the liquor line **47**.

The aqueous media, in regeneration tank **49**, now containing Mg(OH)₂, gypsum, dissolved CaCl₂ is passed through liquor line **47**, by means of a pump **85**, to a second solids separator **87**, such as a hydroclone. According to the method of the present invention, as will be described later, MgSO₄ is added to liquor line **47** via overflow line **51** and branch line **63** to react the dissolved CaCl₂ to precipitate MgCl₂ and CaSO₄. Second solids separator **87** physically separates the CaSO₄ solids from the magnesium hydroxide aqueous overflow.

Gypsum is separated from the magnesium hydroxide suspension in second solids separator **87** and is collected in a tank **89**, via an underflow line **91**, from which the separated solids are charged through a line **93**, having a pump **95**, to a third solids separator **97**, typically a hydroclone separator. A magnesium hydroxide solution containing other components from downstream can be added via a line **99** to tank **89** before the separation in the third solids separator **97**.

The contents of the tank **89** are then fed through line **93** to the third solids separator **97**. In the third solids separator **97**, additional magnesium hydroxide solids are separated from gypsum and crystallized gypsum will form a lower layer, while a suspended gypsum and CaCl₂ solution will form an upper supernatant phase and separation is effected. The magnesium hydroxide and gypsum suspension is discharged from the third solids separator **97**, into a tank which will be described later. The supernatant suspended gypsum and CaCl₂ can be subsequently be returned to the scrubbing system as make-up water.

An overflow line **101** from the second solids separator **87** is directed toward an overflow tank **103**. Overflow line **101** contains mostly magnesium hydroxide with some gypsum in suspension. An overflow line **105** from the third solids separator **97** also reports to the overflow tank **103**. The solution in overflow tank **103** is discharged via line **107** having a pump **109** to a magnesium hydroxide thickener **111**, from which the solution is carried by recycle lines back to upstream locations in the process, including line 99 which discharges solution into tank **89**.

An underflow line **113** of the third solids separator **97** reports directly to a gypsum surge tank **115** which recycles substantially purified gypsum back to oxidizer **31** and regeneration tank **49** via a gypsum recycle line **117** with a pump **119**. Recycling gypsum post-oxidation in the present invention provides necessary seed crystals to crystalize solids from suspension causing less scaling.

Providing overflow line **105** from the third solids separator **97** provides seed crystals to the supersaturated solution in overflow tank **103**, containing solids like gypsum and dissolved CaCl₂. Actually, the overflow from the second solid separator **87** and the third solid separator **97** contain sufficient gypsum content to act as seeding sites and thus discourage gypsum scaling in the lengthy sections of lines following overflow tank **103**. Gypsum is crystallized from solution in overflow tank **103** thereby preventing scale formation on vessel walls. The crystallized products are discharged through line **104**.

Once the magnesium hydroxide solution, containing some suspended gypsum and MgCl₂, enters magnesium hydroxide thickener **111**, the magnesium hydroxide travels by one of two routes back to wet scrubbing unit **1**. Inside magnesium hydroxide thickener **111** the magnesium hydroxide solution will settle into an underflow of magnesium hydroxide solids, gypsum, aqueous calcium chloride and MgCl₂, and an overflow of a magnesium hydroxide solution containing dissolved calcium chloride. The magnesium hydroxide solution will exit via a purge line **121** and will report to the recycle stream, line **7**, of wet scrubbing unit **1**. The solids underflow will be taken by an underflow line **123** and a pump **125** to a magnesium hydroxide storage tank **127**. Here the solid magnesium hydroxide is stored until it may be returned by a line **129** to the recycle stream, line **7**, of wet scrubbing unit **1**.

Before magnesium hydroxide from magnesium hydroxide storage tank **127** is returned by a line **129** it will typically be diluted in a recycle tank (not shown) connected to line **7**. Similarly, the magnesium hydroxide returning by line **121** would also typically enter a recycle tank connected to line 7 which is part of the recycle stream.

Purge line **121**, containing high dissolved magnesium like overflow line **51**, can be utilized to reduce or prevent calcium buildup in the process system by the method of the present invention. Calcium buildup can be reduced by systematically lowering calcium levels returning to the scrubbing loop by precipitation of CaSO₄·2H₂0 and further providing for additional Mg(OH)₂ production and removal of a magnesium-free CaCl₂ stream for commodity recovery.

Referring to the drawing, a bleed line **131** of fines thickener **67**, containing suspended gypsum, calcium chloride and magnesium chloride, can be mixed with purge line **121** to produce and crystalize gypsum and produce aqueous magnesium chloride. The solid phase gypsum created can report to a filter **133** whereas the liquor phase MgCl₂ can report either to the recycle stream, line **7**, or be recovered via conventional means as a commodity, or serve as a participant in a further reaction, where it will be mixed to react with lime slurry from an overflow line **135** from regeneration tank **49**. Overflow line **135** will discharge into a line **137**. The resultant solid phase Mg(OH)₂ of the reaction can report to the magnesium hydroxide thickener **111**, from line **137**, while the liquor phase CaCl₂ can be concentrated and/or crystallized via conventional means and recovered at location **139** as a valuable by-product. Thus, calcium loadings to the scrubber loop are further reduced by the method of the present invention, and chloride levels are controlled to acceptable levels.

The general problem to be overcome by the present invention can be described as follows: The regeneration tank **49** shown in the drawing, serves as a crystallizer in which gypsum and magnesium hydroxide are produced from the reaction of lime slurry and oxidizer **31** effluent, shown in (R1):

Ca(OH)₂ + MgSO₄ → CaSO₄ + Mg(OH)₂ (R1)

The gypsum and magnesium hydroxide products are subsequently separated, typically via hydroclone separators. The potential for scaling arises from the regeneration tank **49** onward because the presence of chlorides, associated with magnesium before regeneration, associates now with calcium and raises the calcium level in the regenerated liquor to the point of gypsum saturation and beyond, as shown in (R2):

Ca(OH)₂ + MgCl₂ → CaCl₂ + Mg(OH)₂ (R2)

Where the solids separators are hydroclones, the hydroclone overflow and overflow tank **103**, in the above process, is particularly susceptible to gypsum scaling since they are characterized by the magnesium hydroxide product and have both low percent solids and low gypsum content. In effect, overflow tank **103** has been depleted of seed crystals and the gypsum forms as a scale in the process lines and equipment rather than forming on a growing crystal face.

As described generally above, the method of the present invention achieves a reduction in scale formation by the removal of sulfates, primarily in the form of calcium sulfate or gypsum, as well as calcium chloride from the system. Removal occurs by one or more of the following which achieve a removal of sulfates from the system: 1) crystallizing gypsum in an overflow tank located after the regeneration tank by providing seed crystals; 2) producing and crystallizing gypsum from the post regeneration tank liquor line while at the same time producing MgCl₂; and 3) producing and crystallizing gypsum from the system return line while at the same time producing MgCl₂.

Referring to the drawing, in the first embodiment, for example, gypsum seed crystals can be added to the overflow tank **103** to prevent gypsum scaling from that point onward by allowing the underflow of solids separator **97**, which typically would go to the magnesium hydroxide thickener **111**, to report to the overflow tank **103**. The overflow from second solid separator **87** and third solid separator **97** contain sufficient gypsum content to act as seeding sites and thus discourage gypsum scaling in the lengthy sections of lines following this tank.

In the second embodiment, liquor phase magnesium chloride can be provided to the process lines downstream of the regeneration tank **49** by reacting oxidizer effluent in line **37**, which is low in pH and high in dissolved magnesium, as magnesium sulfate, with the high dissolved calcium, as calcium chloride, gypsum supersaturated post-regeneration tank liquor. The reaction, (R3), below is utilized to lower the dissolved calcium content and provide liquor phase magnesium in the make-up return to the scrubber:

MgSO₄ + CaCl₂ → CaSO₄ + MgCl₂ (R3)

This reaction scheme thus provides both gypsum seed crystals and liquor phase magnesium chloride to the process circuits susceptible to gypsum scaling. In addition, as illustrated in the drawing, this technique can be utilized further upstream in the process. If a higher gypsum seed content is desired, then hydroclone overflow line **51** can be added to effluent liquor line **47** of regeneration tank **49**. If a low solids stream is preferred, gypsum product filtrate from return line **61** can be added to the liquor line **47**.

Both streams, overflow line **51** and return line **61,** added in optimal ratios can also be utilized since they are both high in the necessary magnesium sulfate species. The first and second embodiments of the present invention can also be combined to reduce the possibility of scaling.

The advantages of the second embodiment are further realized by the substitution of liquor phase magnesium chloride in place of liquor phase calcium chloride in the scrubber return liquor in purge line **121**. The exchange of magnesium for calcium in the scrubber loop translates to less calcium sulfite formation in the recycle lines and ultimately higher oxidation efficiency since liquor phase magnesium sulfite replaces solid phase calcium sulfite in the oxidizer.

### EXAMPLE 1

Example 1 simulates the second embodiment of the present invention which is the reaction of the effluent of oxidizer **31** with gypsum supersaturated post-regeneration tank liquor. Example 1 simulates the reaction resulting from the mixing the oxidizer effluent and the regeneration tank effluent. Overflow line **51** is the overflow from the first hydroclone in this FGD system and a good approximation of the effluent of oxidizer **31** and therefore a first solution was prepared to simulate this composition. The overflow line **101** is the overflow from the second hydroclone **87** and a good approximation of the effluent from the regeneration tank 49 and therefore a second solution was prepared to simulate this composition.

Solutions were prepared as follows:
- Solution 1:: simulating the first hydroclone overflow (the solution in overflow line 51);
- Solution 2:: simulating the second hydroclone overflow liquors (liquor in overflow line 101); and
- Solution 3:: a combination of Solution 1 and Solution 2;
and the above solutions were based on field analyses of the process streams from pilot plant operations.

The solutions (1 and 2) were mixed at either 1:7 or 1:14 volume ratios of first hydroclone overflow (solution 1) to the second hydroclone overflow (solution 2). These mix ratios were chosen on the basis of practical pilot plant flow rates, but an optimal ratio would be 1:4 based on stoichiometry.

Two cases were tested: a relatively low magnesium level case and a relatively high magnesium level case. In both cases, solution 1 was mixed with solution 2 at one or both of the 1:7 and 1:14 ratios and the resultant product liquor was examined and analyzed. The analyses were used as inputs to a computer program which calculated the gypsum relative saturation (GRS) of the starting liquors and the resultant liquor.

Table 1 shows the tabulated results and the change in gypsum relative saturation values of the process streams.

**TABLE 1:**

| Low Magnesium Level | | | | | | |
|---|---|---|---|---|---|---|
| PROGRAM RESULTS [ρ=1.02(g/cm³); T=45°C; P=1 atm] | | | | | | |
| Event | pH | [Ca++] | [Mg++] | [Cl-] | [SO4=] | GRS |
| | | | | | | |
| IS-1 | 6.93 | 877 | 3201 | 6184 | 7401 | 1.00 |
| IS-2 | 11.18 | 3884 | 2 | 5513 | 1131 | 1.05 |
| R=1:7 | 9.93 | 3222 | 365 | 5820 | 1141 | 0.92 |

where, concentrations are given in parts per million (ppm); IS - 1 represents the high magnesium sulfate stream from the oxidizer/gypsum product loop (overflow line **51**); IS - 2 represents the low magnesium/ high calcium, magnesium hydroxide second hydroclone overflow loop that is susceptible to gypsum scaling (overflow line **101**); R = ratio of mixing of one of solution 1 with solution 3; GRS = gypsum relative saturation; p = density; T = temperature; and P = pressure.

Table 1 shows that addition of the first hydroclone overflow (solution 1) to the second hydroclone overflow (solution 2) in a 1:7 ratio reduces gypsum relative saturation from 1.05 to 0.92 and raises the liquor magnesium level for return to the scrubber from 2 ppm to 365 ppm.

Table 2 is the tabulated results and the change in gypsum relative saturation (GRS) values of the process streams for the high magnesium level case.

**TABLE 2:**

| High Magnesium Level | | | | | | |
|---|---|---|---|---|---|---|
| PROGRAM RESULTS [ρ=1.02(g/cm³); T=45°C; P=1 atm] | | | | | | |
| Event | pH | [Ca++] | [Mg++] | [Cl-] | [S04=] | GRS |
| | | | | | | |
| IS-1 | 6.32 | 547 | 6600 | 4599 | 18,253 | 0.89 |
| IS-2 | 8.69 | 2723 | 9 | 4002 | 1388 | 1.23 |
| R=1:14 | 8.83 | 2253 | 413 | 4100 | 1578 | 1.11 |
| R=1:7 | 8.69 | 1743 | 797 | 4187 | 1609 | 0.86 |

where the units and symbols are the same as in Table 1.

Table 2 reveals that addition of the first hydroclone overflow (solution 1) to the second hydroclone overflow (solution 2) in a 1:14 ratio reduces gypsum relative saturation from 1.23 to 1.11 and raises the liquor magnesium level for return to the scrubber from 9 ppm to 413 ppm. The addition of the first hydroclone overflow to the second hydroclone overflow in a 1:7 ratio reduces gypsum relative saturation from 1.23 to 0.86 and raises the liquor magnesium level for return to the scrubber from 9 ppm to 797 ppm.

The above data show improved liquor characteristics with respect to both magnesium content and gypsum scaling potential. In addition, laboratory analysis of the precipitate from the mixing reaction verify the precipitated solids to be gypsum, which adds additional seed crystals to the circuit.

Addition of the oxidizer effluent in close proximity to the regeneration tank outlet would give time for gypsum formation and separation in the product hydroclone circuit, representing an improvement in magnesium hydroxide product quality over utilizing the addition of seed crystals to the overflow tank.

This second embodiment of the present invention is also preferable from the standpoint of injecting liquor phase magnesium to the post-regeneration tank system, which is beneficial not only to the scrubber return but also reduces gypsum relative saturation on a chemical basis by allowing magnesium to associate with the sulfate in solution, making it unavailable for gypsum formation.

Reducing gypsum scaling in the system recycle lines also achieves the object of the present invention. Reacting bleed line **131** of fines thickener **67** and overflow line **135** of regeneration tank **49**, overflow line **135** and line **137** containing high amounts of dissolved magnesium, is the third embodiment of the present invention for reducing scale in the FGD process. The improved dewatering of gypsum over CaSO₃ results in a tighter water balance than in the magnesium enhanced lime process and hence chloride levels in the scrubbing liquor tend-to-build up (+20,000ppm) which represents a containment to the gypsum and Mg(OH)₂ by-products. In addition, chloride association with calcium in the scrubber loop, causes detrimental performance by formation of CaSO₃ solids which decreases scrubbing liquor alkalinity, increases oxidizer power consumption, and further contaminates by-products.

The problem of calcium build up can be solved by systematically lowering calcium levels returning to the scrubbing loop by precipitation of CaSO₄·2H₂O, and further providing for additional Mg(OH)₂ production and removal of a magnesium-free CaCl₂ stream for commodity recovery. The solution relies on two reactions, (R4) and (R5):

CaCl₂ + MgSO₄ → CaSO₄ · 2H₂O +MgCl₂ (R4)

If desired, the reaction products can be separated and the MgCl₂ liquor returned to the scrubber or recovered as a commodity; otherwise a second reaction can be run:

MgCl₂ + Ca(OH)₂ → Mg(OH)₂ + CaCl₂ (R5)

The (R5) reaction products can be separated, the magnesium hydroxide solid phase as additional by-product and the magnesium-free CaCl₂ liquor sent for by-product recovery via conventional crystallization or concentration techniques. The following is an example of the effectiveness of the third embodiment of the present invention.

### EXAMPLE 2

The two reactions, (R4) and (R5), envisioned to accomplish the goals of the invention can be utilized to suit the particular needs of any specific magnesium hydroxide sulfur dioxide scrubbing process application. Synthetic mixtures of thickener overflow and oxidizer liquor were prepared and reacted. A first solution was prepared to simulate the composition of overflow line **131** which is the overflow from the fines thickener **67**. A second solution was prepared based on the composition of the overflow line **135**.

An advantage is that the method of the present invention will lower the pH of the magnesium thickener overflow stream, reducing alkalinity and allowing better primary pH control of the scrubbing loop with Mg(OH)₂ product.

First, solutions were prepared to simulate the relevant part of the FGD process. Table 3 shows S₁ as solution 1, the solution prepared to simulate overflow line **131** from fines thickener **67,** and S₂ as solution 2, the solution prepared to simulate the overflow line **135** from the regeneration tank **49**:

**TABLE 3**

| Sol. | H₂O | Gypsum | MgSO₄ | MgCl₂ 6H₂O | CaCl₂ | pH |
|---|---|---|---|---|---|---|
| S₁ | 0.5 | 3.3 | 14.8 | 4.3 | - | 5.3 |
| S₂ | 3.0 | 10.0 | - | - | 14.1 | 10.8 |

Above reagents are shown as the weight in grams and reagents anhydrous unless otherwise noted. H₂O volume is in liters of deionized water. Lime is added in the experiment to create the further reaction (R5).

The mixing of S₁ and S₂ to obtain the solution S₃ results in the reaction (R4). S₃ is a simulation of the composition in purge line **121** which can be returned to scrubbing unit **1**. S₃P is designates the precipitated product of S₃ which, as given in reaction (R4), is gypsum.

The mixing of S₃ with lime creates the reaction (R5) and produces a solution S₄ with a solid precipitate S₄P₁ of gypsum and S₄P₂ of magnesium hydroxide and a filter product S₄F of calcium chloride which can be recycled or wasted. Table 4 shows the liquor chemical analysis of the reaction solutions:

**TABLE 4:**

| Liquor Chemical Analyses | | | | | | |
|---|---|---|---|---|---|---|
| Soln. | pH | ρ | Ca⁺⁺ | Mg⁺⁺ | Cl⁻ | SO₄⁼Calc (Mg/l) |
| S₁ | 5.3 | 1.003 | 669 | 6882 | 2920 | 25,000 |
| S₂ | 10.7 | 1.008 | 2124 | Ø | 2815 | 1,250 |
| S₃ | 9.4 | 1,003 | 1125 | 928 | 2955 | 2,400 |
| S₄F₁ | 10.9 | 1,001 | 2514 | Ø | 2805 | 2,200 |
| S₄F₂ | 10.9 | 1,002 | 2118 | Ø | 2895 | 1,100 |

Table 5 shows the chemical analysis of the precipitated products above.

**TABLE 5:**

| Precipitate Analyses: Percent | | | | | |
|---|---|---|---|---|---|
| Soln. | DRY Wet grams | % solids Filter Cake | CaO | MgO | S Total |
| S₃P | 16.6 | 69.5 | 36.30 | 1.61 | 19.63 |
| S₄P₁ | 3.2 | 28.3 | 7.62 | 24.38 | 2.89 |
| S₄P₂ | 5.3 | 36.6 | 17.81 | 60.93 | 8.77 |

For S₄F₁ and S₄P₁, lime was added at 65°F, while for S₄F₂ and S₄P₂, lime was added at 108°F.

Table 6 compares the concentration of each of S₁, S₂ and S₃ as well as pH for three different tests.

**TABLE 6:**

| Series 1: Thickener Overflow and Ox. Bleed Stream | | | | | | |
|---|---|---|---|---|---|---|
| TEST # | SOLUTN # | pH | [Ca] ppm | [Mg] ppm | [Cl] ppm | [SO₄] ppm |
| 1 | 1 | 5.0 | 40 | 3182 | 3184 | 7874 |
| | 2 | 10.7 | 1930 | 0 | 2876 | 824 |
| | 3 | 9.3 | 1299 | 572 | 3048 | 2286 |
| 2 | 1 | 5.5 | 24 | 2949 | 3085 | 7887 |
| | 2 | 10.8 | 2013 | 0 | 2893 | 844 |
| | 3 | 9.1 | 1360 | 722 | 2969 | 2190 |
| 3 | 1 | 5.1 | 14 | 7672 | 3705 | 25412 |
| | 2 | 10.8 | 2085 | 0 | 2793 | 901 |
| | 3 | 8.9 | 948 | 1630 | 3015 | 4546 |

Table 7 shows the same data as Table 6 only arranged differently for ease of comparison.

**TABLE 7:**

| Series 2: Thickener Overflow and Ox. Bleed Stream | | | | | | |
|---|---|---|---|---|---|---|
| TEST # | SOLUTN # | pH | [Ca] ppm | [Mg] ppm | [Cl] ppm | [S04] ppm |
| 1 | 1 | 5.0 | 40 | 3182 | 3184 | 7874 |
| 2 | 1 | 5.5 | 24 | 2949 | 3085 | 7887 |
| 3 | 1 | 5.1 | 14 | 7672 | 3705 | 25412 |
| 1 | 2 | 10.7 | 1930 | 0 | 2876 | 824 |
| 2 | 2 | 10.8 | 2013 | 0 | 2893 | 844 |
| 3 | 2 | 10.8 | 2085 | 0 | 2793 | 901 |
| 1 | 3 | 9.3 | 1299 | 572 | 3048 | 2286 |
| 2 | 3 | 9.1 | 1360 | 722 | 2969 | 2190 |
| 3 | 3 | 8.9 | 948 | 1630 | 3015 | 4546 |

The results of Table 6 and Table 7 show a magnesium ion concentration in solution S₃ in each test run T1=572ppm, T2=722ppm and T3=1630ppm, which is adequate to prevent scaling in the FGD system by the method of the present invention. Therefore the chemistry as proposed by the method of the present invention prevents scaling by the removal of sulfates primarily in the form of calcium sulfate or gypsum.

While there has been illustrated and described several embodiments of the present invention, it will be apparent that various changes and modifications thereof will occur to those skilled in the art. It is intended in the appended claims to cover all such changes and modifications that fall within the true spirit and scope of the present invention.

## Claims

1. A process for the desulfurization of sulfur dioxide-containing gases comprising:
contacting a sulfur dioxide-containing gas stream with an aqueous solution of magnesium hydroxide in a wet scrubbing unit to remove sulfur dioxide therefrom, and after said contact, said aqueous solution contains dissolved sulfites of magnesium;
passing said aqueous solution to an oxidizer, whereby an oxidized product is formed containing dissolved magnesium sulfates;
adding gypsum to said oxidizer;
discharging said oxidized product and said gypsum to a first separator which separates said oxidized product and gypsum into a liquid overflow (A) containing dissolved magnesium sulfates and gypsum in suspension and an underflow (B) containing mostly a salable gypsum product of high-solids content which can be dewatered by a belt filter or a rotary drum;
passing a. first portion of said liquid overflow (A) to a first thickener whereby said solution in said first thickener separates into a liquid overflow (C) containing mostly dissolved magnesium sulfate with some gypsum in suspension and an underflow (D) containing mostly undissolved solids and solid impurities;
passing a second portion of said liquid overflow (A) to an effluent line from a regeneration tank;
passing said underflow (B) of said first separator to a filter to separate the solids in said underflow (B) from said magnesium sulfate solution;
introducing into said regeneration tank a lime slurry and said liquid overflow (C) from said first thickener whereby said gypsum, said calcium chloride and aqueous magnesium hydroxide are produced;
adding gypsum to said regeneration tank;
discharging the regeneration tank solution to said effluent line whereby magnesium sulfate and gypsum are introduced to produce and crystalize gypsum remaining in the solution and to produce magnesium chloride;
separating said gypsum from the aqueous magnesium hydroxide; and
recycling said magnesium hydroxide back to said wet scrubbing unit.

2. The method of Claim 1, wherein said gypsum introduced into said regeneration tank effluent line is gypsum in suspension from said liquid overflow (A) of said first separator.

3. The method of Claim 1, wherein said gypsum introduced into said regeneration tank effluent line is gypsum in suspension from said liquid overflow (A) from said first separator and from said liquid overflow (C) from said first thickener.

4. The method of Claim 1, wherein said underflow (B) of said solids separator is passed to a filter to separate the solids in said underflow (B) from said magnesium sulfate solution leaving a clarified solution for recycling to said effluent line of said regeneration tank.

5. The method of Claim 4, wherein said gypsum introduced into said regeneration tank effluent line is gypsum in suspension from said clarified solution of said underflow (B) of said first separator.

6. The method of Claim 1, wherein said gypsum introduced into said regeneration tank effluent line is gypsum in suspension from said liquid overflow (A) from said first separator; said liquid overflow (C) from said first thickener; and said underflow (B) which is clarified and recycled to said effluent line.

7. The process for the desulfurization of sulfur dioxide-containing gases according to Claim 1, wherein prior to recycling said magnesium hydroxide, the following steps occur:
passing said regeneration tank discharge to a second separator which separates said regenerated products into a liquid overflow (E) containing magnesium hydroxide and an underflow (F) containing mostly suspended undissolved solids and gypsum;
passing said underflow (F) to a dilution tank where magnesium hydroxide is added;
passing the contents of said dilution tank to a third solids separator which creates a magnesium hydroxide overhead solution and suspended gypsum in the underflow which reports to a gypsum surge tank; and
passing said overflow (E) to said separator overflow tank.

8. The process for the desulfurization of sulfur dioxide-containing gases according to Claim 1, wherein prior to recycling said magnesium hydroxide, the following steps occur:
passing said regeneration tank discharge to a second separator which separates said regenerated products into a liquid overflow (E) containing magnesium hydroxide and an underflow containing (F) mostly undissolved solids and gypsum;
passing said underflow (F) to a dilution tank where magnesium hydroxide is added;
passing the contents of said dilution tank to a third solids separator which creates a magnesium hydroxide solution with suspended gypsum which reports to a separator overflow tank;
passing the overflow (E) of second solids separator to said separator overflow tank;
passing the solution from the overflow tank to a thickener to be returned in a thickener purge (G) to said scrubbing unit;
introducing into said thickener purge (G), a bleed line from said first thickener forming solid phase magnesium hydroxide and calcium chloride.

9. The method of Claim 8, wherein the calcium chloride is removed from thickener purge (G) and purified.

10. The method of Claim 8, wherein the pH of said thickener purge (G) is lowered which reduces alkalinity and allows pH control in said thickener purge (G).
